# EUROPÄISCHE PATENTSCHRIFT

(11) **EP 0 483 534 B1**
(45) Veröffentlichungstag und Bekanntmachung des Hinweises auf die Patenterteilung: **29.03.1995**
(21) Anmeldenummer: 91116743.5
(22) Anmeldetag: 01.10.1991
(51) Int. Cl.: G02B 6/12

(54) **Planarer optischer Wellenleiter mit feldaufweitenden Eigenschaften**
Planar optical waveguide having field expanding properties
Guide d'onde optique plan à propriétés d'expansion de champ

(30) Priorität: 29.10.1990 DE 4034382
(43) Veröffentlichungstag der Anmeldung: 06.05.1992
(73) Patentinhaber: ANT Nachrichtentechnik GmbH, D-71522 Backnang (DE)
(72) Erfinder: Schwander, Thomas, Dipl.-ing., W-7150 Backnang (DE)

(56) Entgegenhaltungen:
- IEEE PHOTONICS TECHNOLOGY LETTERS vol. 2, no. 2, February 1990, pp. 88-90 ; T.L. KOCH et al. : 'Tapered Waveguide InGaAs/InGaAsP Multiple-Quantum-Well Lasers'
- PATENT ABSTRACTS OF JAPAN vol. 7, no. 48 (P-178)(1193) 24 February 1983 ; & JP-A-57 196 204
- PATENT ABSTRACTS OF JAPAN vol. 11, no. 97 (P-560)(2544) 26 March 1987 ; & JP-A-61 249 004

## Beschreibung

Die vorliegende Erfindung betrifft eine planare optische Wellenleiterstruktur, bestehend aus einem Substrat und mehreren wellenleitenden Schichten, von denen mindestens eine entlang der Wellenausbreitungsrichtung eine Querschnittsänderung aufweist.

Eine derartige planare optische Wellenleiterstruktur, welche einen verlustarmen Übergang von einem Wellenleiter mit geringer Feldweite auf einen Wellenleiter mit größerer Feldweite darstellt, ist beispielsweise aus IEEE Photonics Technology Letters, Vol. No. 2, Febr. 1990, S. 88 - 90 bekannt. Die Feldaufweitung, bzw. umgekehrt die Feldkonzentration wird durch entsprechende Dickenänderung (Tapern) der wellenführenden Epitaxieschichten erzielt. Die Realisierung von Schichtdickenänderungen ist allerdings technologisch sehr problematisch und kaum reproduzierbar.

Der Erfindung liegt daher die Aufgabe zugrunde, eine planare optische Wellenleiterstruktur eingangs genannter Art anzugeben, die mit den üblichen Epitaxie- und Strukturierungsverfahren gut reproduzierbar hergestellt werden kann.

Erfindungsgemäß wird diese Aufgabe durch die Merkmale des Anspruchs 1 gelöst. Vorteilhafte Weiterbildungen der Erfindung gehen an den Unteransprüchen hervor.

Nach der Erfindung wird eine Feldweitenänderung der über einen planaren optischen Wellenleiter geführten Wellen allein durch technologisch gut beherrschbare Schichtbreitenänderungen in Wellenausbreitungsrichtung erreicht.

Anhand mehrerer in der Zeichnung dargestellter Ausführungsbeispiele wird nun die Erfindung näher erläutert. Es zeigen:
Fig. 1 eine perspektivische Darstellung eines optischen Rippenwellenleiters,
Fig. 2a, b, c drei Querschnitte durch die optischen Wellenleiter gemäß Fig. 1 mit gleichbleibender Rippenbreite,
Fig. 3a, b, c drei Querschnitte durch den optischen Wellenleiter gemäß Fig. 1 mit sich ändernder Rippenbreite,
Fig. 4 eine perspektivische Darstellung eines optischen Mehrschicht-Streifenwellenleiters,
Fig. 5a, b, c drei Querschnitte durch den optischen Wellenleiter gemäß Fig. 4, bei dem eine Streifenwellenleiterschicht eine konstante Breite hat und
Fig. 6a, b, c drei Querschnitte durch den optischen Wellenleiter gemäß Fig. 4, bei dem jede Streifenwellenleiterschicht eine Breitenänderung erfährt.

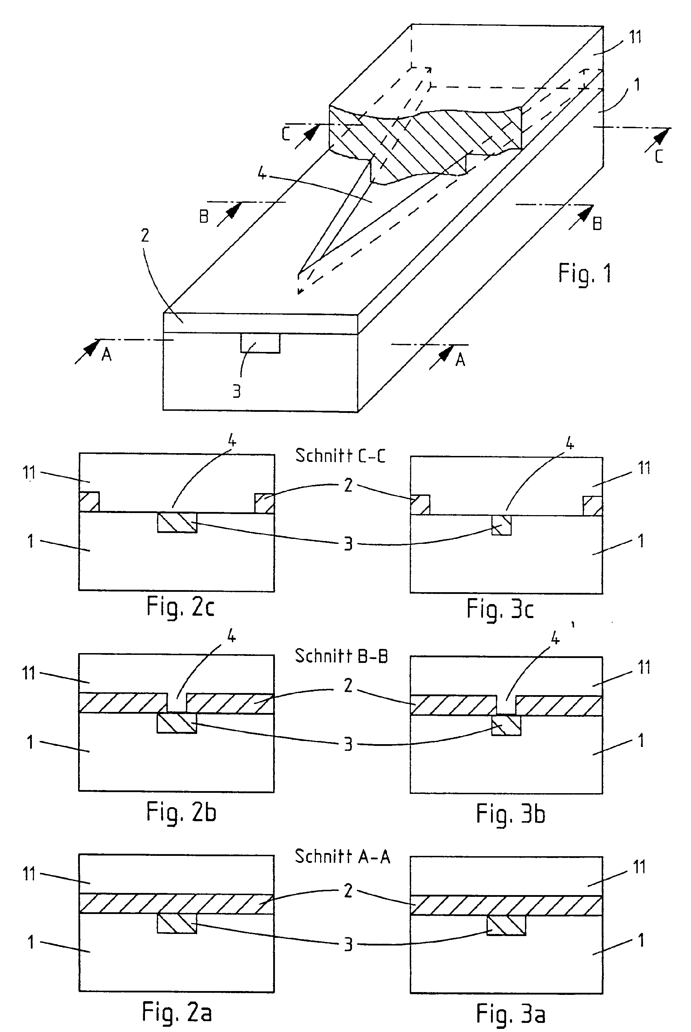

In der Fig. 1 ist eine planare optische Wellenleiterstruktur dargestellt, die so beschaffen ist, daß darüber sich ausbreitende Wellen eine Feldaufweitung bzw. eine Feldkonzentration erfahren, je nachdem in welcher Richtung die Wellen über diese Wellenleiterstruktur geführt werden. Die optische Wellenleiterstruktur besteht in bekannter Weise aus in einem niedrig brechendem Substratmaterial 1 (z.B. aus Inp oder Ga_{y}Al_{y-1}As oder SiO₂) eingebetteten Schichten 2 und 3 (z.B. InGaAsP oder SiₓO_{y}N_{z}) mit hoher Brechzahl. Die breitere Schicht 2 dient als Deckschicht für die darunter liegende als Streifenwellenleiter wirkende schmalere Schicht 3. Wie Fig. 1 zeigt, ist in die Deckschicht 2 eine Aussparung 4 eingelassen, die an einem Ende mit einer sehr geringen Breite beginnt und sich in Wellenausbreitungsrichtung verbreitert. Die Aufweitung der Aussparung 4 erfolgt gemäß der Darstellung in Fig. 1 keilförmig. Sie kann aber auch irgendeiner nichtlineareren Funktion folgen. Mit zunehmender Aufweitung der Aussparung 4 reduziert sich die Breite der Deckschicht 2.

Dadurch, daß die erste starkbrechende Deckschicht 2 in der Aussparung 4 durch schwachbrechendes Material 11 ersetzt wird, kommt es zur Verringerung der effektiven Brechzahl, einer Schwächung des Wellenleiters und damit zu einer Feldaufweitung. Und zwar bewirkt diese Maßnahme eine Feldaufweitung in vertikaler Richtung (d.h. senkrecht zur Schichtbreite).

Während gemäß dem in den Figuren 2a, b, c dargestellten Ausführungsbeispiel die Breite des Streifenwellenleiters 3 über seine gesamte Länge unverändert bleibt, erfährt der Streifenwellenleiter 3 gemäß dem in den Figuren 3a, b, c dargestellten Ausführungsbeispiel ebenfalls eine Breitenreduktion, wodurch das Feld der sich zum verjüngten Ende des Streifenwellenleiters hin ausbreitenden Wellen noch stärker aufgeweitet wird, nämlich zusätzlich noch in horizontaler Richtung.

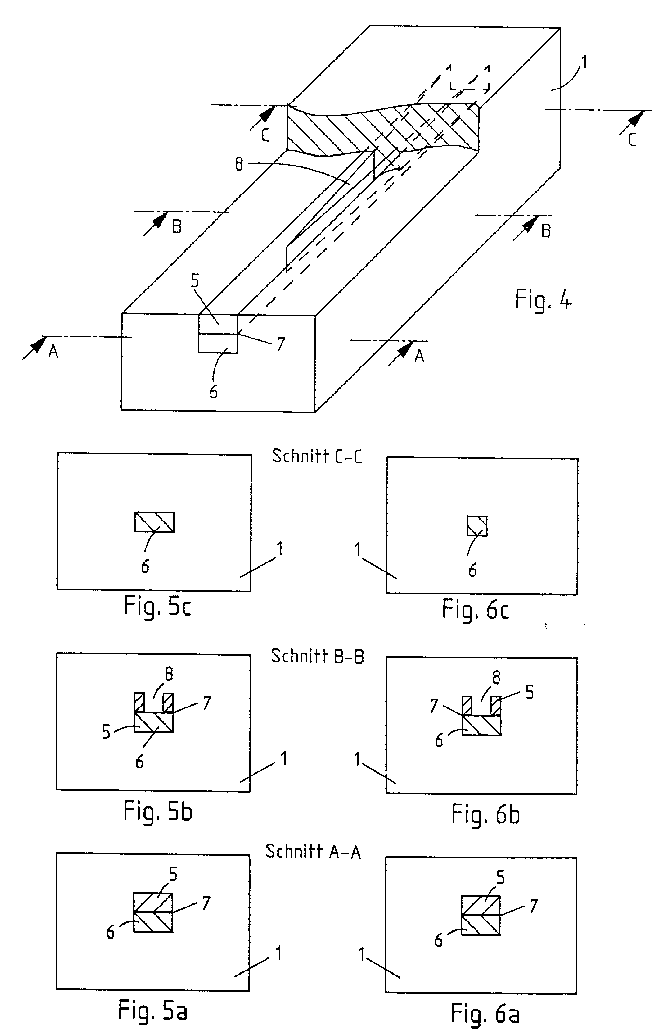

Gegenüber der zuvor beschriebenen Wellenleiterstruktur unterscheidet sich die in den Figuren 4, 5 und 6 dargestellte Wellenleiterstruktur durch die Form des in dem Substrat 1 eingebetteten Streifenwellenleiters 6 und der Deckschicht 5. Wie der Figur 4 zu entnehmen ist, sind beide Schichten 5 und 6 gleich breit. Sie sind durch eine Ätzstopschicht 7 voneinander getrennt. Dieser eine hohe Feldkonzentration bewirkende zweischichtige Wellenleiter geht in seinem Verlauf in einen einschichtigen Streifenwellenleiter über, der nur noch eine schwache Wellenführung bewirkt. Dieser Übergang entsteht dadurch, daß in eine der beiden Schichten 5, 6 eine Aussparung 8 eingelassen ist, die sich in Richtung der zu erzielenden Feldaufweitung allmählich soweit verbreitert, daß sich die mit der Aussparung 8 versehene Schicht 5 auf die Breite "0" reduziert und nur noch die andere Schicht 6 als einschichtiger Streifenwellenleiter übrigbleibt. In der Aussparung 8 tritt anstelle des hochbrechenden Materials der Deckschicht 5 niederbrechendes Material, z.B. das des Substrats 1. Das im Zusammenhang mit dem Ausführungsbeispiel gemäß Figur 1, 2 und 3 zu der Form der Aussparung 4 gesagte trifft auch für die Aussparung 8 zu.

Um den Übergang vom zweischichtigen Streifenwellenleiter auf den einschichtigen Streifenwellenleiter zu verdeutlichen, sind in den Figuren 5a, 5b und 5c drei Querschnitte A-A, B-B und C-C durch die Wellenleiterstruktur der Figur 4 dargestellt. Hierbei wird davon ausgegangen, daß der Streifenwellenleiter 6 über seine gesamte Länge die Breite beibehält. Allein die Breitenreduktion der Deckschicht 5 hat eine Feldaufweitung in vertikaler Richtung zur Folge. Man kann aber auch, wie den Darstellungen der Querschnitte A-A, B-B und C-C in den Figuren 6a, b, c zu entnehmen ist, zusätzlich eine Reduktion der Breite des Streifenwellenleiters 6 vornehmen, was eine zusätzliche Schwächung der Wellenführung und damit eine noch größere Feldaufweitung mit sich bringt, nämlich noch in horizontaler Richtung.

## Patentansprüche

1. Planare optische Wellenleiterstruktur, bestehend aus einem Substrat (1) und mehreren wellenleitenden Schichten (2, 3, 4, 5, 6), von denen mindestens eine entlang der Wellenausbreitungsrichtung eine Querschnittsänderung aufweist,
dadurch gekennzeichnet,
daß die wellenleitenden Schichten einen Streifenwellenleiter (3, 6) aufweisen, der in das Substrat (1) eingebettet ist, daß auf dem Streifenwellenleiter (3, 6) eine Deckschicht (2, 5) vorgesehen ist, die im Bereich des Streifenwellenleiters (3, 6) eine in Wellenausbreitungsrichtung sich verbreiternde Aussparung (4) aufweist, die mit einem Material mit niedrigerem Brechungsindex als jenem des Streifenwellenleiters gefüllt ist, so daß sich der effektive Brechungsindex des Streifenwellenleiters verringert und damit eine Feldaufweitung eines im Streifenwellenleiter geführten Signals vertikal zur Wellenausbreitungsrichtung erfolgt.

2. Planare optische Wellenleiterstruktur nach Anspruch 1, dadurch gekennzeichnet, daß die Breite des Streifenwellenleiters (3, 6) in Wellenausbreitungsrichtung abnimmt.

3. Planare optische Wellenleiterstruktur nach Anspruch 1, dadurch gekennzeichnet, daß der Streifenwellenleiter (5, 6) aus zwei übereinander angeordneten Schichten gleicher Breite besteht, deren obere Schicht (5) als Deckschicht fungiert.

## Claims

1. Planar optical waveguide structure, consisting of a substrate (1) and several wave-conducting layers (2, 3, 4, 5, 6), of which at least one exhibits a cross-sectional change along the wave propagation direction, characterised thereby that the wave-conducting layers comprise a strip waveguide (3, 6), which is embedded in the substrate (1), that provided on the strip waveguide (3, 6) is a cover layer (2, 5), which in the region of the strip waveguide (3, 6) has a recess (4) which widens in wave propagation direction and which is filled with a material with lower refractive index than that of the strip waveguide so that the effective refractive index of the strip waveguide reduces and thus a field expansion of a signal, which is guided in the strip waveguide, takes place vertically to the wave propagation direction.

2. Planar optical waveguide structure according to claim 1, characterised thereby that the width of the strip waveguide (3, 6) decreases in wave propagation direction.

3. Planar optical waveguide structure according to claim 1, characterised thereby that the strip waveguide (5, 6) consists of two layers of like width which are disposed one above the other and the upper layer (5) of which functions as a cover layer.

## Revendications

1. Structure de guide d'ondes optiques plan, se composant d'un substrat (1) et de plusieurs couches de guidage d'ondes (2, 3, 4, 5, 6) dont au moins l'une présente une variation de section le long de la direction de propagation des ondes, caractérisée,
en ce que les couches de guidage d'ondes constituent un guide d'ondes à bandes (3, 6), qui est enrobé dans le substrat (1), en ce que sur le guide d'ondes à bandes (3, 6) est prévue une couche de recouvrement (2, 5), qui présente à proximité du guide d'ondes (3, 6) une fenêtre (4) s'élargissant dans le sens de la propagation des ondes, qui est remplie d'un matériau à indice de réfraction plus faible que celui du guide d'ondes à bandes, de sorte que l'indice de réfraction effectif du guide d'ondes à bandes est réduit et ainsi provoque un élargissement du champ d'un signal guidé dans le guide d'ondes à bandes verticalement par rapport à la direction de propagation des ondes.

2. Structure de guide d'ondes optiques plan selon la revendication 1, caractérisée en ce que la largeur du guide d'ondes à bandes (3, 6) diminue dans le sens de la propagation des ondes.

3. Structure de guide d'ondes optiques plan selon la revendication 1, caractérisée en ce que le guide d'ondes à bandes (5, 6) se compose de deux couches superposées de même largeur dont la couche supérieure (5) joue le rôle de couche de recouvrement.
